# EUROPEAN PATENT APPLICATION

(11) **EP 4 708 482 A1**
(43) Date of publication of application: **11.03.2026**
(21) Application number: 25200383.5
(22) Date of filing: 05.09.2025
(51) Int. Cl.: H01M 50/15, H01M 50/176, H01M 50/553, H01M 50/562

(54) **POLE, COVER PLATE ASSEMBLY AND BATTERY CELL**

(30) Priority: 06.09.2024 CN 202422195845 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: HE, Wei, Huizhou, Guangdong, 516039 (CN); ZHENG, Xu, Huizhou, Guangdong, 516039 (CN); SHU, Kuanjin, Huizhou, Guangdong, 516039 (CN); DUAN, Dong, Huizhou, Guangdong, 516039 (CN); LIU, Ziwen, Huizhou, Guangdong, 516039 (CN)
(74) Representative: Berggren Oy

(57) **Abstract**

The present application provides a pole, a cover plate assembly and a battery cell, related to the field of battery technology. The pole includes a first metal part and a second metal part; where the first metal part has an outer peripheral surface, and the outer peripheral surface is provided with an embedded groove; the second metal part is provided with a connecting groove, one end of the first metal part is embedded into the connecting groove, an embedding block is provided protruding from a groove wall of the connecting groove toward the first metal part, and the embedding block is embedded into the embedded groove; a thickness of the groove wall of the connecting groove is D, and along a radial direction of the pole, a depth dimension of the embedding block embedded into the embedded groove is L1, satisfying: 0 < L1 ≤ 0.5D.

## Description

### TECHNICAL FIELD

The present application relates to the field of battery technology, and specifically relates to a pole, a cover plate assembly and a battery cell.

### BACKGROUND

A pole is an important component for connecting the inside and outside of a battery cell. One end of the pole is connected with an external circuit of the battery cell, and the other end is connected with an internal electrode assembly of a power battery. In order to reduce costs and weight, the external circuit of the battery cell adopts aluminum material for current transmission. However, inside the battery cell, a negative-electrode current collector and a current collector of a negative electrode sheet are made of the same material, which is copper material. Therefore, in order to improve conductivity of the pole and control weight and cost of the battery cell, a composite pole is adopted to connect the negative-electrode current collector with the external circuit. The copper composite pole includes an aluminum part and a copper part connected to one end of the aluminum part. The copper part is located inside the battery cell and is connected with the negative-electrode current collector. The aluminum part penetrates through a cover plate of the battery cell, and one end of the aluminum part away from the copper part is connected with the external circuit.

Due to different melting points and different material fluidity of materials of the copper part and the aluminum part, combination reliability between them is poor, resulting in poor reliability of the pole. Based on this, how to improve reliability of the composite pole is a problem to be solved by the present application.

### SUMMARY

Embodiments of the present application provide a pole, a cover plate assembly and a battery cell, which can improve reliability of a composite pole.

In a first aspect, embodiments of the present application provide a pole, including a first metal part and a second metal part; where the first metal part has an outer peripheral surface, and the outer peripheral surface is provided with an embedded groove; and, the second metal part is provided with a connecting groove, where one end of the first metal part is embedded into the connecting groove, an embedding block is provided protruding from a groove wall of the connecting groove toward the first metal part, and the embedding block is embedded into the embedded groove; where material of the first metal part is different from material of the second metal part, a thickness of the groove wall of the connecting groove is D, and along a radial direction of the pole, a depth dimension of the embedding block embedded into the embedded groove is L1, satisfying: 0 < L1 ≤ 0.5D.

In an embodiment, in an axial direction of the pole, the embedding block has a height dimension H1, satisfying: D ≤ H1 ≤ 3D.

In an embodiment, the embedding block includes a first embedding portion and a second embedding portion, where the first embedding portion is arranged to extend radially inward from a side of the groove wall of the connecting groove close to an opening of the connecting groove, and the second embedding portion is arranged to extend axially outward from a side of the first embedding portion away from a groove bottom of the connecting groove.

In an embodiment, a side wall of the second embedding portion away from an axis of the pole is coplanar with the outer peripheral surface.

In an embodiment, in the axial direction of the pole, the second embedding portion has a height dimension H2 satisfying: 0.5D ≤ H2 ≤ 2D.

In an embodiment, the embedded groove is arranged to extend along a circumferential line of the outer peripheral surface, and the embedding block is arranged to extend along the circumferential line of the outer peripheral surface.

In an embodiment, both the embedded groove and the embedding block extend along the circumferential line of the outer peripheral surface to form an annular shape.

In an embodiment, a plurality of embedded grooves are provided, where the plurality of embedded grooves are disposed at intervals along the circumferential line of the outer peripheral surface; and, a plurality of embedding blocks are provided, where the plurality of embedding blocks are in one-to-one correspondence with the plurality of embedded grooves.

In an embodiment, a wall thickness of a groove bottom of the connecting groove is consistent with a wall thickness of the groove wall of the connecting groove.

In an embodiment, the first metal part is of aluminum material, and the second metal part is of copper material.

In a second aspect, embodiments of the present application provide a cover plate assembly including a cover plate, a pole, a terminal, an upper plastic part, a lower plastic part, a current collector, a sealing ring and the aforementioned pole, where the pole penetrates through the cover plate; the terminal is located on one side of the cover plate and connected with the pole; the upper plastic part is disposed between the terminal and the cover plate; the lower plastic part is disposed on another side of the cover plate; the current collector is connected with one end of the pole away from the terminal; and, the sealing ring is disposed between the pole and a mounting hole; where the material of the first metal part is consistent with material of the current collector, the first metal part is connected with the current collector, and the terminal is connected with the second metal part; or, the material of the second metal part is consistent with the material of the current collector, the second metal part is connected with the current collector, and the terminal is connected with the first metal part.

In a third aspect, embodiments of the present application provide a battery cell including a casing, an electrode assembly and the aforementioned cover plate assembly; where the casing has a containing cavity; the electrode assembly is disposed in the containing cavity; and, the cover plate is connected with the casing and closes an opening of the containing cavity, and the current collector is further connected with the electrode assembly.

Beneficial effects of the embodiments of the present application are as follows.

In the embodiments of the present application, by embedding the second metal part into the embedded groove of the first metal part through the embedding block and limiting the embedding depth, on one hand, the first metal part and the second metal part can be locked with each other in the axial direction of the pole, so as to effectively prevent the first metal part and the second metal part from being disconnected; on the other hand, the cross-sectional dimension of the first metal part at the embedded groove can be guaranteed to ensure strength of the first metal part, thereby improving performances such as tensile resistance and shock resistance of the pole. In this way, reliability of the pole can be improved.

### BRIEF DESCRIPTION OF THE DRAWINGS

To more clearly illustrate the technical solutions in the embodiments of the present application, the drawings required for describing the embodiments will be briefly introduced below. Obviously, the drawings in the following description are merely some embodiments of the present application. For those skilled in the art, other drawings can also be obtained based on these drawings without making creative labor.
Fig. 1 is a schematic structural diagram of a first kind of a pole provided by embodiments of the present application;
Fig. 2 is a schematic structural diagram of a second kind of a pole provided by embodiments of the present application;
Fig. 3 is a schematic structural diagram of a third kind of a pole provided by embodiments of the present application;
Fig. 4 is an enlarged view of portion B in Fig. 3;
Fig. 5 is a cross-sectional view along A-A in Fig. 3 provided by embodiments of the present application;
Fig. 6 is another cross-sectional view along A-A in Fig. 3 provided by embodiments of the present application;
Fig. 7 is yet another cross-sectional view along A-A in Fig. 3 provided by embodiments of the present application;
Fig. 8 is a schematic structural diagram of a cover plate assembly provided by embodiments of the present application.

### Explanation of reference signs:

011: pole; 112: first metal part; 1121: embedded groove; 1122: outer peripheral surface; 113: second metal part; 1131: connecting groove; 1132: embedding block; 1133: first surface; 1134: first embedding portion; 1135: second embedding portion; 1136: groove bottom; 1137: groove wall;
118: step;
012: terminal;
002: cover plate assembly; 021: cover plate; 022: upper plastic part; 023: lower plastic part; 024: current collector.

### DETAILED DESCRIPTION

The technical solutions in the embodiments of the present application will be clearly and completely described below with reference to the accompanying drawings in the embodiments of the present application. Obviously, the described embodiments are merely some embodiments rather than all the embodiments of the present application. Based on the embodiments in the present application, all other embodiments obtained by those skilled in the art without making creative labor shall fall within the protection scope of the present application.

In addition, it should be understood that the specific implementations described herein are only used to illustrate and explain the present application, and are not used to limit the present application. In the present application, the terms "first" and "second" are only used for descriptive purposes, and shall not be understood as indicating or implying relative importance or implicitly indicating the quantity of indicated technical features. Thus, a feature defined with "first" or "second" may explicitly or implicitly include one or more of the features. In the description of the present application, "a plurality of" means two or more unless otherwise explicitly and specifically defined.

In the description of the present application, it should be noted that, unless otherwise clearly specified and limited, the terms "install", "connect" and "connection" shall be understood in a broad sense. For example, they may be fixed connection, detachable connection, or integral connection; may be mechanical connection, and electrical connection. For those of ordinary skill in the art, the specific meanings of the above terms in the present application can be understood according to specific situations.

The term "include", "comprise" or any other variants thereof is intended to cover non-exclusive inclusion, so that a product including a series of elements not only includes those elements, but also includes other elements not explicitly listed.

In the description of the embodiments of the present application, words such as "example" or "for example" are used for illustration, explanation or description. Any embodiment or design scheme described as "example" or "for example" in the embodiments of the present application shall not be interpreted as being more preferred than or having more advantages over another embodiment or design scheme. The words such as "example" or "for example" are intended to present relative concepts in a clear manner.

To facilitate the understanding of the solutions of the present application, the spline curves and arrows used for reference signs in the drawings are explained here: components indicated by spline curves without arrows are solid components, that is, components with a solid structure; components indicated by spline curves with arrows are virtual components, that is, components without a solid structure.

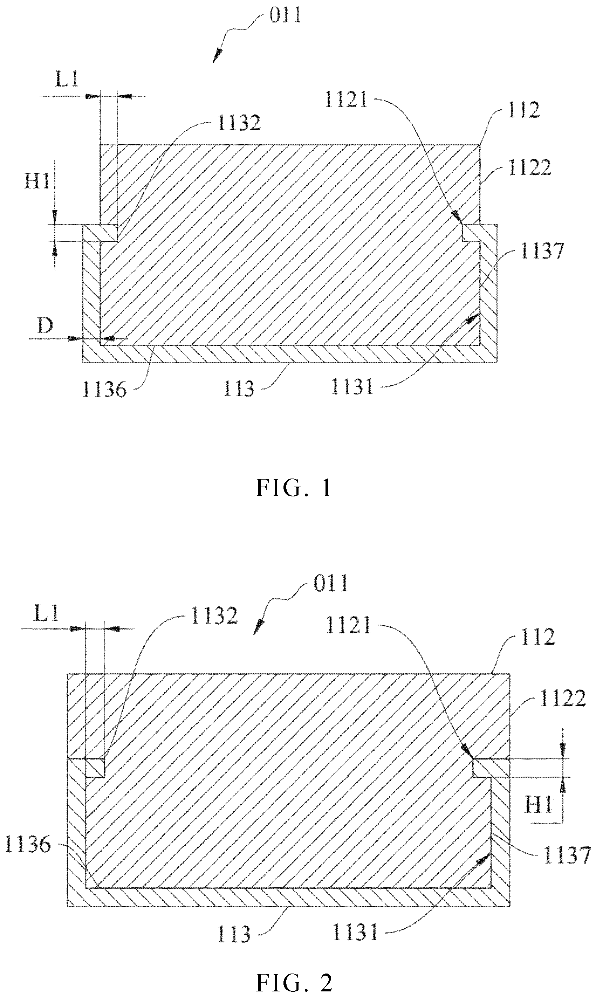

Please refer to Fig. 1. Embodiments of the present application provide a pole 011. The pole 011 includes a first metal part 112 and a second metal part 113. The first metal part 112 has an outer peripheral surface 1122. The outer peripheral surface 1122 is provided with an embedded groove 1121. The second metal part 113 is provided with a connecting groove 1131. One end of the first metal part 112 is embedded into the connecting groove 1131. An embedding block 1132 is provided protruding from the groove wall of the connecting groove 1131 toward the first metal part 112. The embedding block 1132 is embedded into the embedded groove 1121. The material of the first metal part 112 is different from the material of the second metal part 113. The thickness of the groove wall of the connecting groove 1131 is D. In the radial direction of the pole 011, the depth dimension of the embedding block 1132 embedded into the embedded groove 1121 is L1, satisfying: 0 < L1 ≤ 0.5D.

It can be understood that the depth dimension L1 of the embedding block 1132 embedded into the embedded groove 1121 includes but is not limited to 0.1D, 0.15D, 0.2D, 0.23D, 0.28D, 0.3D, 0.36D, 0.39D, 0.4D, 0.42D, 0.45D, 0.46D, and 0.5D.

Exemplarily, taking a certain square pole 011 as an example, the wall thickness D of the second metal part 113 adopted thereby is 0.5mm. Correspondingly, the depth dimension L1 of the embedding block 1132 embedded into the embedded groove 1121 is 0 < L1 ≤ 0.25mm.

In addition, the first metal part is electrically connected with the current collector, and the first metal part is of copper material; correspondingly, the second metal part is of aluminum material and is connected with the terminal 012. Alternatively, the second metal part is electrically connected with the current collector 024, and the second metal part is of copper material; and, the first metal part may be of aluminum material and is connected with the terminal 012.

It can be understood that the first metal part 112 may be formed by casting first, and then the second metal part 113 may be cast on the first metal part 112, so that the embedding block 1132 is matched with the embedded groove 1121; alternatively, an upsetting method may be adopted to make the embedding block 1132 matched with the embedded groove 1121.

In the present embodiment, by embedding the second metal part into the embedded groove 1121 of the first metal part through the embedding block 1132 and limiting the embedding depth, on one hand, the first metal part 112 and the second metal part 113 can be locked with each other in the axial direction of the pole 011, so as to effectively prevent the first metal part 112 and the second metal part 113 from being disconnected; on the other hand, the cross-sectional dimension of the first metal part 112 at the embedded groove 1121 can be guaranteed to ensure the strength of the first metal part 112, thereby improving performances such as tensile resistance and shock resistance of the pole 011. In this way, the reliability of the pole 011 can be improved.

In addition to the structure of the pole 011 shown in Fig. 1, the pole 011 in the present embodiment may also be shown in other structures. For example, the structure of the pole 011 shown in Fig. 2, where Fig. 2 is a schematic structural diagram of a second kind of a pole 011 provided by embodiments of the present application.

Moreover, limiting the maximum value of the depth dimension L1 of the embedding block 1132 embedded into the embedded groove 1121 can improve the uniformity of the flow of the second metal part in the embedded groove 1121 when the pole 011 is formed by upsetting, and can avoid the second metal part from being torn.

Please refer to Fig. 1. In an embodiment, in the axial direction of the pole 011, the embedding block 1132 has a height dimension H1 satisfying: D ≤ H1 ≤ 3D.

It can be understood that the height dimension H1 of the embedding block 1132 includes but is not limited to D, 1.2D, 1.5D, 1.6D, 1.8D, 1.9D, 2D, 2.2D, 2.3D, 2.5D, 2.6D, 2.7D, 2.8D, 2.9D, and 3D.

In the present embodiment, by limiting the height dimension H1 of the embedding block 1132, on one hand, it can avoid insufficient strength of the embedding portion between the first metal part 112 and the second metal part 113 caused by the height dimension being too small, thereby effectively ensuring the combination reliability between the first metal part 112 and the second metal part 113; on the other hand, it can avoid high material cost caused by the height dimension being too large, so as to control the material cost of the pole 011 and help improve the economy of the battery cell.

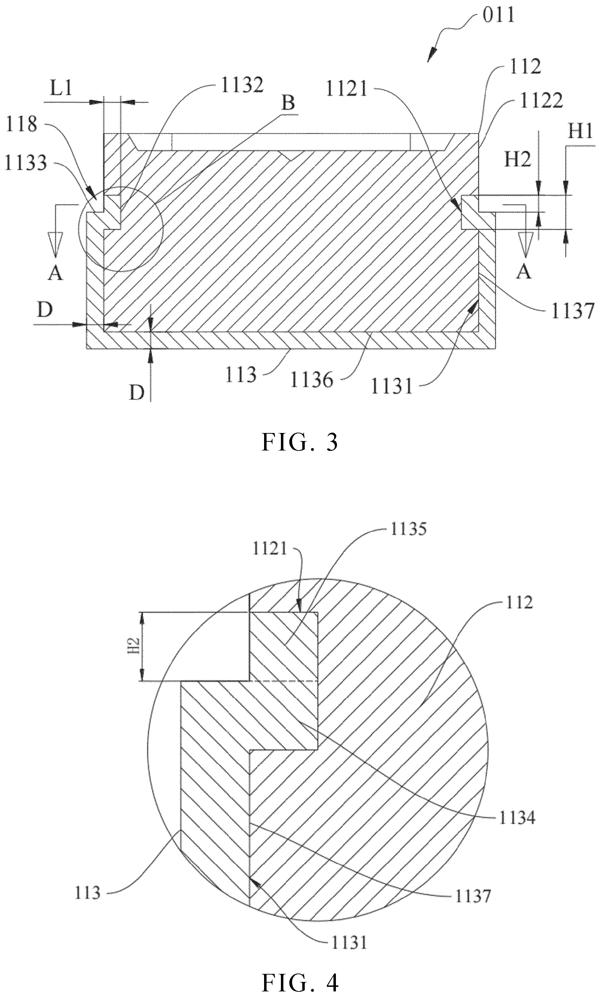

Please refer to Fig. 3 and Fig. 4. Fig. 3 is a schematic structural diagram of a third kind of a pole 011 provided by embodiments of the present application, and Fig. 4 is an enlarged view of portion B in Fig. 3. In an embodiment, the embedding block 1132 includes a first embedding portion 1134 and a second embedding portion 1135. The first embedding portion 1134 is arranged to extend radially inward from a side of the groove wall 1137 of the connecting groove 1131 close to the opening of the connecting groove 1131, and the second embedding portion 1135 is arranged to extend axially outward from a side of the first embedding portion 1134 away from the groove bottom 1136 of the connecting groove 1131. In this way, a step 118 is formed between the second metal part 113 and the second embedding portion 1135. Therefore, when the pole 011 is connected with other components, other components can be positioned based on the step 118. In this way, not only the operability of connection between the pole 011 and other components can be improved, but also the part of the second metal part 113 located at the embedding block 1132 can be limited by other components, so as to improve the combination reliability between the first metal part 112 and the second metal part 113.

Moreover, when the first metal part 112 is of copper material and the second metal part 113 is of aluminum material, the terminal 012 is sleeved on one end of the first metal part 112 away from the second metal part 113 and is in stopping fit with the step 118. Then, after all main components of the cover plate assembly 002 are assembled and before the terminal 012 is welded with the pole 011, upsetting is performed on the pole 011, so that the pole 011 can expand radially and a combination surface of aluminum (terminal 012)-copper (second metal part 113)-aluminum (first metal part 112) is formed at the step 118. Due to the different fluidity of different metals, the combination surface of aluminum-copper-aluminum is uneven, so that the combination is more reliable.

The step 118 includes a first surface 1133 perpendicular to the axis of the pole 011 and a peripheral wall disposed around the axis of the pole 011. The first surface 1133 extends along the circumferential line of the pole 011 to form an annular shape, and the inner diameter side of the first surface 1133 is connected with one end of the peripheral wall.

Please refer to Fig. 3. In an embodiment, the side wall of the second embedding portion 1135 away from the axis of the pole 011 is coplanar with the outer peripheral surface 1122. In this way, the surface structure of the pole 011 can be regular, which is conducive to simplifying the structure of the components matched with it.

For example, when the first metal part 112 is matched with the terminal 012, the terminal 012 is sleeved on one end of the first metal part 112 away from the second metal part 113 and is in stopping fit with the step 118. Since the side wall of the embedding block 1132 away from the axis of the pole 011 is coplanar with the outer peripheral surface 1122, the hole on the terminal 012 matched with the side wall and the outer peripheral surface 1122 can be an equal-diameter hole, so as to simplify the production process of the terminal 012.

Please refer to Fig. 3. In an embodiment, in the axial direction of the pole 011, the second embedding portion 1135 has a height dimension H2 satisfying: 0.5D ≤ H2 ≤ 2D.

It can be understood that the height dimension H2 of the part of the embedding block 1132 located outside the connecting groove 1131 includes but is not limited to 0.5D, 0.6D, 0.8D, 1D, 1.1D, 1.2D, 1.5D, 1.6D, 1.8D, and 2D.

In the present embodiment, through the above limitation, on one hand, the second metal part 113 can be guaranteed to have a sufficient height dimension H2 on the formed step 118, which is conducive to increasing the matching surface between the component matched with the step 118 and the embedding block 1132, thereby improving the limiting effect of the component on the embedding block 1132, so that the embedding block 1132 is stably matched with the embedded groove 1121; on the other hand, it can avoid excessive height dimension H2 from covering more peripheral side wall of the first metal part 112, thereby ensuring that the peripheral side wall of the first metal part 112 has a sufficient area for connecting with other components.

In an embodiment, the embedded groove 1121 is arranged to extend along the circumferential line of the outer peripheral surface 1122, and the shape and size of the embedding block 1132 are consistent with the shape and size of the embedded groove 1121. In this way, the matching area between the embedded groove 1121 and the embedding block 1132 can be increased, so as to improve the combination reliability between the first metal part 112 and the second metal part 113.

It can be understood that the shape and size of the embedding block 1132 are consistent with the shape and size of the embedded groove 1121, means that the embedding block 1132 and the embedded groove 1121 may have dimensional errors within a certain range, and such dimensional errors do not affect the connection between the first metal part 112 and the second metal part 113.

In addition, it can be understood that when upsetting forming is adopted, the side of the embedding block 1132 away from the groove bottom of the connecting groove 1131 may be in contact with the groove wall of the embedded groove 1121, or there may be a gap. Moreover, the side of the embedding block 1132 away from the groove bottom of the connecting groove 1131 may be a coplanar structure, or an uneven structure formed by upsetting, or other structures.

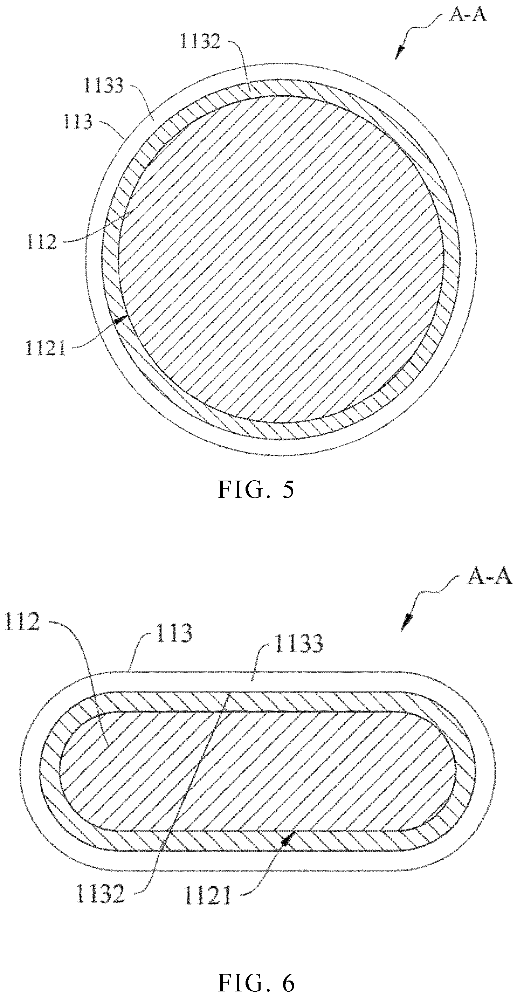

Please refer to Fig. 5, Fig. 5 is a cross-sectional view along A-A in Fig. 3 provided by embodiments of the present application. In an embodiment, the embedded groove 1121 extends along the circumferential line of the outer peripheral surface 1122 to form an annular shape. In this way, the matching area between the embedded groove 1121 and the embedding block 1132 can be increased, so as to improve the combination reliability between the first metal part 112 and the second metal part 113.

Moreover, such an arrangement can also increase the embedding strength between the first metal part 112 and the second metal part 113 to avoid relative rotation between them.

In another embodiment, the cross-sectional view along A-A in Fig. 3 may be rectangular, as shown in Fig. 6, Fig. 6 is another cross-sectional view along A-A in Fig. 3 provided by embodiments of the present application.

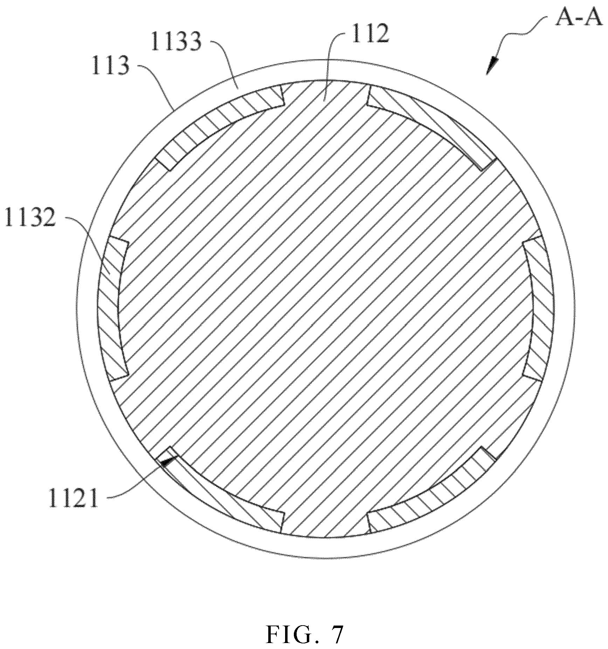

Please refer to Fig. 7, Fig. 7 is yet another cross-sectional view along A-A in Fig. 3 provided by embodiments of the present application. In an embodiment, a plurality of embedded grooves 1121 are provided. The plurality of embedded grooves 1121 are disposed at intervals along the circumferential line of the outer peripheral surface 1122. A plurality of embedding blocks 1132 are provided, and the plurality of embedding blocks 1132 are in one-to-one correspondence with the plurality of embedded grooves 1121. In this way, the matching area between the embedded grooves 1121 and the embedding blocks 1132 can be increased, so as to improve the combination reliability between the first metal part 112 and the second metal part 113.

The plurality of embedded grooves 1121 are evenly distributed at intervals along the circumferential line of the outer peripheral surface 1122.

Please refer to Fig. 3. In an embodiment, the wall thickness of the groove bottom of the connecting groove 1131 is consistent with the wall thickness of the groove wall of the connecting groove 1131.

It can be understood that both the wall thickness of the groove bottom of the connecting groove 1131 and the wall thickness of the groove wall of the connecting groove 1131 are D. Of course, after the pole 011 is formed by upsetting, the wall thickness of the groove bottom and the wall thickness of the groove wall may have a difference within a certain range, and the wall thickness of the groove bottom and the wall thickness of the groove wall within this difference can be regarded as consistent.

In the present embodiment, through the above arrangement, the structure of the second metal part 113 is simple and easy to form.

In an embodiment, the first metal part 112 is of aluminum material, and the second metal part 113 is of copper material. In this way, a structure in which the aluminum part is covered by the copper part is formed. On one hand, this can make the pole 011 have a larger copper surface, which is conducive to ensuring the reliability of the connection between the pole 011 and the current collector; on the other hand, the aluminum material can be protected based on the higher strength and durability of the copper material compared with the aluminum material, so as to reduce the risk of damage to the pole 011.

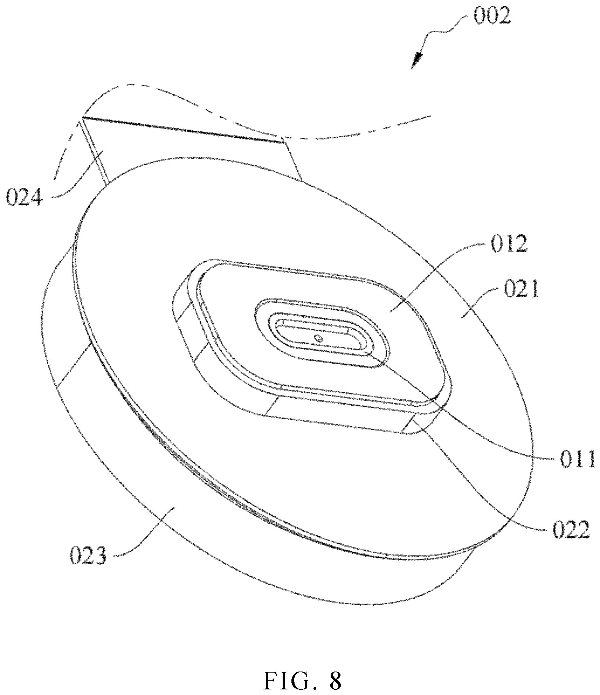

Please refer to Fig. 8. Correspondingly, embodiments of the present application further provide a cover plate assembly 002. The cover plate assembly 002 includes a cover plate 021, a pole 011, a terminal 012, an upper plastic part 022, a lower plastic part 023, a current collector 024, a sealing ring, and the aforementioned pole 011. The pole 011 penetrates through the cover plate 021. The terminal 012 is located on one side of the cover plate 021 and connected with the pole 011. The upper plastic part 022 is disposed between the terminal 012 and the cover plate 021. The lower plastic part 023 is disposed on another side of the cover plate 021. The current collector 024 is connected with one end of the pole 011 away from the terminal 012. The sealing ring is disposed between the pole 011 and a mounting hole. The material of the first metal part 112 is consistent with the material of the current collector 024, the first metal part 112 is connected with the current collector 024, and the terminal 012 is connected with the second metal part 113; or, the material of the second metal part 113 is consistent with the material of the current collector 024, the second metal part 113 is connected with the current collector 024, and the terminal 012 is connected with the first metal part 112.

It can be understood that when the first metal part 112 is of copper material, the first metal part 112 is connected with one end of the current collector 024, and the terminal 012 is connected with the second metal part 113; and, when the second metal part 113 is of copper material, the second metal part 113 is connected with one end of the current collector 024, and the terminal 012 is connected with the first metal part 112.

In the present embodiment, by adopting the pole 011 provided by some embodiments of the present application, on one hand, the first metal part 112 and the second metal part 113 can be locked with each other in the axial direction of the pole 011, so as to effectively prevent the first metal part 112 and the second metal part 113 from being disconnected; on the other hand, the strength of the embedding structure between the first metal part 112 and the second metal part 113 can be guaranteed, thereby improving performances such as tensile resistance and shock resistance of the pole 011. In this way, the combination reliability between the first metal part 112 and the second metal part 113 can be improved, so as to improve the reliability of the cover plate assembly 002.

Correspondingly, embodiments of the present application further provide a battery cell. The battery cell includes a casing, an electrode assembly, and the aforementioned cover plate assembly 002. The casing has a containing cavity. The electrode assembly is disposed in the containing cavity. The cover plate 021 is connected with the casing and closes an opening of the containing cavity. The current collector 024 is further connected with the electrode assembly.

In the present embodiment, by adopting the cover plate assembly 002 provided by some embodiments of the present application, on one hand, the first metal part 112 and the second metal part 113 can be locked with each other in the axial direction of the pole 011, so as to effectively prevent the first metal part 112 and the second metal part 113 from being disconnected; on the other hand, the strength of the embedding structure between the first metal part 112 and the second metal part 113 can be guaranteed, thereby improving performances such as tensile resistance and shock resistance of the pole 011. In this way, the combination reliability between the first metal part 112 and the second metal part 113 can be improved, so as to improve the reliability of the battery cell.

The technical solutions and technical effects of the present application will be described in detail below through specific embodiments. The following embodiments are only part of the embodiments of the present application and do not specifically limit the present application.

The present embodiment aims to investigate the influence of the depth dimension L1 of the embedding block 1132 embedded into the embedded groove 1121 on the tensile performance of the pole 011. It can be understood that the depth dimension of the embedding block 1132 embedded into the embedded groove 1121 is consistent with the depth dimension of the embedded groove 1121.

The test contents of the embodiment are specifically described as follows:

### I. Test-related descriptions

(1) The simulation software used for the test is LSDYNA.
(2) The first metal part 112 is of aluminum material with an outer diameter of 20mm; and, the second metal part 113 is of copper material with a thickness D of 0.8mm.
(3) The height dimension H1 of the embedding block 1132 embedded into the embedded groove 1121 is 0.8mm.

### II. Test results

Poles 011 with L1 being 0.4D=0.32mm, 0.5D=0.4mm, D=0.8mm and 2D=1.6mm respectively are selected for tensile tests, and the tensile force values at which the poles 011 are damaged are as follows:

**Table 1. Tensile test of pole 011**

| D | L1 | F/N |
|---|---|---|
| 0.8mm | 0.4D=0.32 | 37215N |
| | 0.5D=0.4mm | 36473N |
| | 0.6D=0.48mm | 36110N |
| | D=0.8mm | 32701N |
| | 2D=1.6mm | 26746N |

The damage of the pole 011 mainly refers to the damage of the first metal part 112.

It can be known from Table 1 that as the depth dimension L1 of the embedding block 1132 embedded into the embedded groove 1121 increases, the tensile force value at which the pole 011 is damaged gradually decreases, that is, the tensile performance of the pole 011 gradually decreases. When the tensile performance of the pole 011 is 36110N, the strength requirement of the pole 011 is not met.

Therefore, while meeting the embedding requirements between the first metal part 112 and the second metal part 113, in order to ensure the tensile strength of the pole 011, the depth dimension L1 of the embedding block 1132 embedded into the embedded groove 1121 should not be greater than 0.5D.

The embodiments of the present application are introduced in detail above. Specific examples are used herein to illustrate the principles and implementation manners of the present application. The description of the above embodiments is only used to help understand the method and core idea of the present application; meanwhile, for those skilled in the art, according to the idea of the present application, there will be changes in the specific implementation manners and application scopes. In conclusion, the content of this specification should not be understood as a limitation to the present application.

## Claims

1. A pole (011), **characterized by** comprising:
a first metal part (112), comprising an outer peripheral surface (1122), wherein the outer peripheral surface (1122) is provided with an embedded groove (1121); and
a second metal part (113), provided with a connecting groove (1131), wherein one end of the first metal part (112) is embedded into the connecting groove (1131), an embedding block (1132) is provided protruding from a groove wall (1137) of the connecting groove (1131) toward the first metal part (112), and the embedding block (1132) is embedded into the embedded groove (1121);
wherein material of the first metal part (112) is different from material of the second metal part (113), a thickness of the groove wall (1137) of the connecting groove (1131) is D, and a depth dimension of the embedding block (1132) embedded into the embedded groove (1121) is L1, satisfying: 0 < L1 ≤ 0.5D.

2. The pole (011) according to claim 1, **characterized in that**, in an axial direction of the pole (011), the embedding block (1132) has a height dimension H1, satisfying: D ≤ H1 ≤ 3D.

3. The pole (011) according to claim 1, **characterized in that** the embedding block (1132) comprises a first embedding portion (1134) and a second embedding portion (1135), wherein the first embedding portion (1134) is arranged to extend radially inward from a side of the groove wall (1137) of the connecting groove (1131) close to an opening of the connecting groove (1131), and the second embedding portion (1135) is arranged to extend axially outward from a side of the first embedding portion (1134) away from a groove bottom (1136) of the connecting groove (1131).

4. The pole (011) according to claim 3, **characterized in that** a side wall of the second embedding portion (1135) away from an axis of the pole (011) is coplanar with the outer peripheral surface (1122).

5. The pole (011) according to claim 3, **characterized in that**, in the axial direction of the pole (011), the second embedding portion (1135) has a height dimension H2 satisfying: 0.5D ≤ H2 ≤ 2D.

6. The pole (011) according to any of claim 1 to claim 4, **characterized in that** the embedded groove (1121) is arranged to extend along a circumferential line of the outer peripheral surface (1122), and the embedding block (1132) is arranged to extend along the circumferential line of the outer peripheral surface (1122).

7. The pole (011) according to claim 6, **characterized in that** both the embedded groove (1121) and the embedding block (1132) extend along the circumferential line of the outer peripheral surface (1122) to form an annular shape.

8. The pole (011) according to any of claim 1 to claim 4, **characterized in that** a plurality of embedded grooves (1121) are provided, wherein the plurality of embedded grooves (1121) are disposed at intervals along the circumferential line of the outer peripheral surface (1122); and, a plurality of embedding blocks (1132) are provided, wherein the plurality of embedding blocks (1132) are in one-to-one correspondence with the plurality of embedded grooves (1121).

9. The pole (011) according to any of claim 1 to claim 4, **characterized in that** a wall thickness of a groove bottom (1136) of the connecting groove (1131) is consistent with a wall thickness of the groove wall (1137) of the connecting groove (1131).

10. The pole (011) according to any of claim 1 to claim 4, **characterized in that** the first metal part (112) is of aluminum material, and the second metal part (113) is of copper material.

11. A cover plate assembly (002), **characterized by** comprising:
a cover plate (021);
a pole (011) according to any of claim 1 to claim 10, penetrating through the cover plate (021);
a terminal (012), located on one side of the cover plate (021) and connected with the pole (011);
an upper plastic part (022), disposed between the terminal (012) and the cover plate (021);
a lower plastic part (023), disposed on another side of the cover plate (021);
a current collector (024), connected with one end of the pole (011) away from the terminal (012); and
a sealing ring, disposed between the pole (011) and a mounting hole;
wherein the material of the first metal part (112) is consistent with material of the current collector (024), the first metal part (112) is connected with the current collector (024), and the terminal (012) is connected with the second metal part (113); or, the material of the second metal part (113) is consistent with the material of the current collector (024), the second metal part (113) is connected with the current collector (024), and the terminal (012) is connected with the first metal part (112).

12. A battery cell, **characterized by** comprising:
a casing, comprising a containing cavity;
an electrode assembly, disposed in the containing cavity; and
a cover plate assembly (002) according to claim 11, wherein the cover plate (021) is connected with the casing and closes an opening of the containing cavity, and the current collector (024) is further connected with the electrode assembly.
